# EUROPEAN PATENT SPECIFICATION

(11) **EP 0 905 803 B1**
(45) Date of publication and mention of the grant of the patent: **26.02.2003**
(21) Application number: 98118495.5
(22) Date of filing: 30.09.1998
(51) Int. Cl.: H01M 2/10, H01M 6/44, H01M 2/20

(54) **Battery Holder**
Batteriehalter
Support de batterie

(30) Priority: 30.09.1997 JP 26523797
(43) Date of publication of application: 31.03.1999
(73) Proprietor: Japan Storage Battery Co., Ltd., Kyoto-shi, Kyoto-fu (JP)
(72) Inventor: Nishiyama, Koichi, Japan Storage Battery Co., Ltd., Kyoto-shi, Kypto-fu (JP); Tanaka, Yoshinori, Japan Storage Battery Co., Ltd., Kyoto-shi, Kypto-fu (JP); Matsubara, Takehito, Japan Storage Bat. Co., Ltd., Kyoto-shi, Kypto-fu (JP)
(74) Representative: Grosse, Wolfgang, Dipl.-Ing.

(56) References cited:
- EP-A- 0 361 848
- EP-A- 0 727 833
- JP-U- 2 099 561

## Description

### BACKGROUND OF THE INVENTION

The invention relates to a battery holder which holds a plurality of sealed-type batteries in a bundle.

A prior art battery holder has a structure such as that shown in Japanese Utility Model Publication (Kokai) No. SH060-22752. In the battery holder, a plurality of cylindrical batteries are arranged in such a manner that their peripheral side faces are adjacent to each other, a frame surrounds the periphery of the arranged batteries, and a cover is attached to each of the end faces of the cylindrical batteries through which the positive and negative electrodes of the cylindrical batteries are exposed. The frame consists of a side wall surrounding the periphery of the batteries, and a number of partition walls which are inwardly projected from the side wall. The cylindrical batteries are supported by inserting them into the spaces between the side wall and the partition walls, respectively. In some cases, a plurality of holes are formed in a block-like frame and cylindrical batteries are respectively fitted into the holes, or alternatively a large hole having a shape which is obtained by coupling such holes to each other is formed and a plurality of cylindrical batteries are fitted in a bundle into the hole. In the covers, elastic connecting plates are adequately disposed on the faces respectively opposing the end faces of the cylindrical batteries in the frame, so that the cylindrical batteries are electrically connected to each other.

In Japanese Utility Model Publication (Kokai) No. HEI2-99561, proposed is a battery box in which a plurality of battery housing portions are formed by a case outer wall and a case partition wall so as to respectively house a plurality of batteries as one unit. In each of the battery housing portions, a stay is inserted into a center portion of the unit of the plural housed batteries, so that the plural batteries are fixed with being closely contacted with the partition wall.

When a battery is discharged, heat is generated as a result of an internal chemical reaction. In the case of a heavy current drain, particularly, the amount of generated heat is increased. In a sealed-type secondary battery such as a nickel cadmium battery or a nickel-metal hydride battery, the heat generation occurs also when the battery is charged. When the temperature of the battery is raised as a result of the heat generation, self-discharge may reduce the battery capacity or shorten the service life of the battery. Therefore, it is previously determined that such a battery is used in a temperature range of -10 to 60°C during a discharging process and 0 to 35°C during a charging process.

In the prior art battery holder, however, each cylindrical battery is surrounded by the frame and both the ends are covered by the covers so that the interior of the holder is substantially hermetically sealed, and hence heat generated from the cylindrical batteries during the discharging or charging process cannot be sufficiently dissipated to the exterior. This produces a problem in that the temperature of the cylindrical batteries may be raised to a level higher than the specified range. In the case where battery packs are to be used, when the battery packs are longitudinally held by a battery holder, a large space is required. In same cases, in order to eliminate this problem, batteries are held by a battery holder so as to constitute a battery pack, and the battery pack is used with being laterally arranged with a number of similar battery packs. When battery packs are to be connected to each other, the connection must be surely conducted so that connecting portions where a collector is connected to another collector are not short-circuited. When battery packs are to be connected to each other, furthermore, the connection is requested so to be unaffected by vibration or shock as much as possible. These problems are also applicable to sealed-type batteries of other types such as those of rectangular batteries.

Document EP 0 727 833 Al shows a battery holder according to the preamble of claim 1. The terminals of adjacent batteries disposed in said holder are connected via connecting members disposed on the outer surface of the battery holder.

### Summary of the Invention

The invention has been conducted in order to solve the above-discussed problems. It is an object of the invention to provide a battery holder which allows a number of battery holders to be arranged under a state where both the ends of batteries are supported by the support members and the support members are laterally arranged, which allows a number of battery packs to be connected to each other while a short-circuit is surely prevented from occurring, which is advantageous in view of a space, and in which heat generated from sealed-type batteries can be rapidly dissipated to the exterior.

In order to solve the problems, the battery holder of the invention has configuration ① in which the battery holder comprises a plate-like support member in which a plurality of battery holes of a predetermined depth, into which sealed portions of a positive terminal side or negative terminal side of sealed-type batteries that are to be clamped at one side by the support member are to be respectively fitted, are formed in one face of said support member, a terminal hole is formed concentrically with each of said battery holes and with smaller diameter compared with each of said battery holes and vent holes which pass through from one face to the other face are opened at appropriate places among said battery holes of said support member, characterized in that one row of said battery holes with terminal holes is a row for positive terminal side, the other row of said battery holes with terminal holes is a row for negative terminal side, a groove is formed between adjacent paired positive terminal side terminal hole and negative terminal side terminal hole, said paired positive terminal side terminal hole and negative terminal side terminal hole being communicated with each other through said groove.

In one particular embodiment, the battery holder has a configuration ②, wherein said plate-like support member comprises extensions at opposite end portions of the rows for positive and negative terminal sides respectively, each of said extensions only having a battery hole of a predetermined depth, into which a sealed portion of a positive terminal side or a negative terminal side of a sealed-type battery is to be fitted.

In another embodiment, the battery holder of the invention has configuration ③, wherein in each of said one and other rows, only a battery hole for a positive terminal side or a negative terminal side is formed at each of opposite end portions.

In another embodiment, the battery holder of the invention has configuration ④, wherein said battery holder comprises a pair of plate-like support members which support one and another side of batteries, respectively, one of said support members is the support member set forth in configuration ①, and the other support member is the support member of set forth in configuration ②.

In another embodiment, the battery holder of the invention has configuration ⑤, wherein, among said terminal holes the paired positive terminal side terminal hole and negative terminal side terminal hole which are communicated with each other through said groove are inclinedly disposed.

In another embodiment, the battery holder of the invention has configuration ⑥**,** wherein a recess groove is formed at an appropriate place of a side face of said plate-like support member.

In another embodiment, the battery holder of the invention has configuration ⑦**,** wherein, when collectors of different heights are disposed on said positive and negative terminal sides, said terminal holes which are adjacent to each other are respectively formed at depths having a height difference which is equal to a height difference of said collectors of different polarities.

### BRIEF DESCRIPTION OF THE DRAWINGS

Fig. 1 is a plan view of a support member constituting the battery holder of the invention;
Fig. 2 is a section view of the support member constituting the battery holder of the invention, and taken along the line A-A of Fig. 1;
Fig. 3 is a section view of the support member constituting the battery holder of the invention, and taken along the line B-B of Fig. 1;
Fig. 4 is a section view of the support member constituting the battery holder of the invention, and taken along the line C-C of Fig. 1;
Fig. 5(A) is a perspective view of a sealed-type battery which is to be held by the battery holder of the invention, and as seen from the positive side, and Fig. 5(B) is a perspective view of the battery as seen from the negative side;
Fig. 6 is a perspective view showing a state in which sealed-type batteries are held by two support members constituting the battery holder of the invention;
Fig. 7 is a front view showing a state in which batteries are held between two support members constituting the battery holder of the invention;
Fig. 8 is a perspective view as seen in the direction of the arrow P in Fig. 7;
Fig. 9 is a bottom view as seen in the direction of the arrow Q in Fig. 7; and
Fig. 10 is a plan view showing a state in which a plurality of battery packs each of which is held by two support members constituting the battery holder of the invention are horizontally arranged and connected.

### DETAILED DESCRIPTION OF THE PREFERRED EMBODIMENTS

Hereinafter, embodiments of the invention will be described with reference to the accompanying drawings.

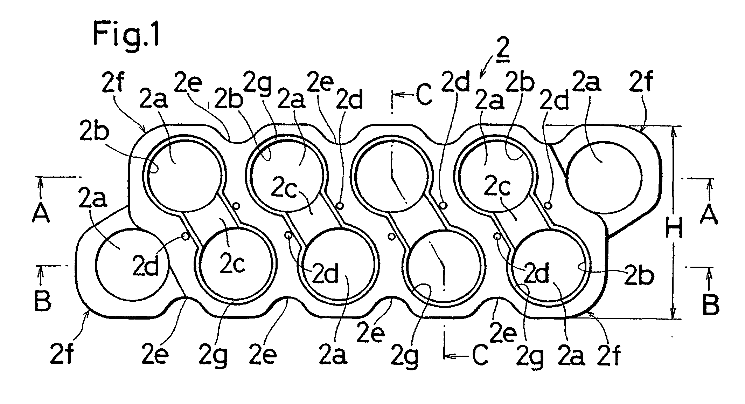

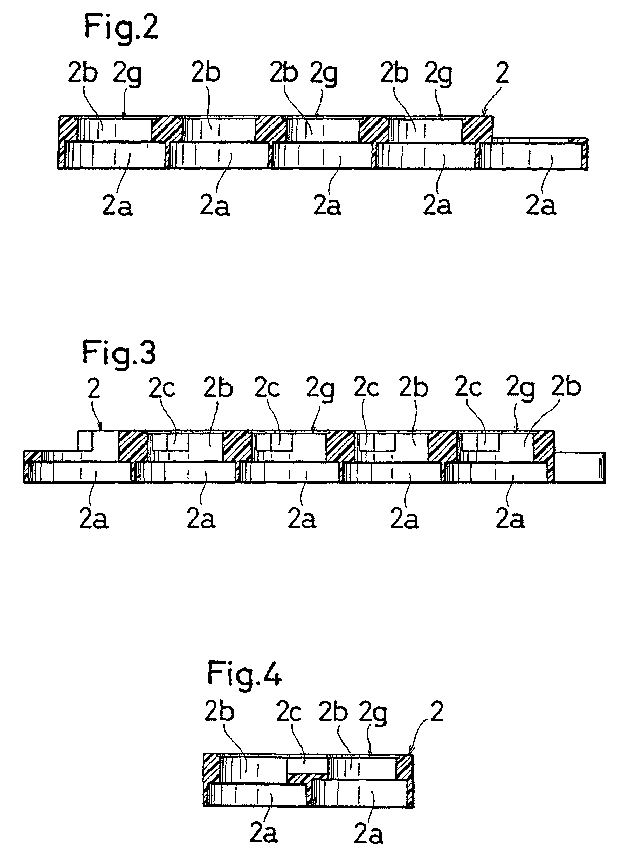

Fig. 1 is a plan view of the battery holder of the invention, Fig. 2 is a section view taken along the line A-A of Fig. 1, Fig. 3 is a section view taken along the line B-B of Fig. 1, and Fig. 4 is a section view taken along the line C-C of Fig. 1.

The battery holder consists of a support member 2 which, for example, holds one side of sealed-type batteries, and is produced by injection molding a synthetic resin (for example, an ABS resin) which is flame resistant and electrically insulative. When batteries are to be held, one side of each battery is held by the support member 2, and the other side is held by a support member 2' having a structure which is obtained by slightly modifying that of the support member 2 as described later.

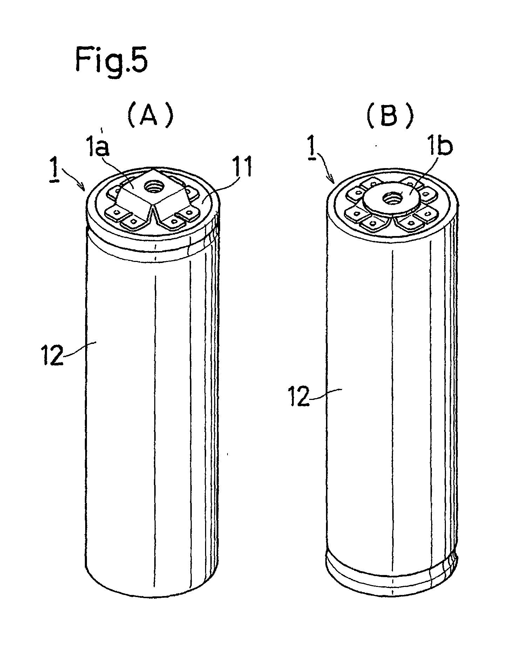

Fig. 5(A) is a perspective view of a sealed-type battery which is to be held by the battery holder of the invention, and as seen from the positive side, and Fig. 5(B) is a perspective view of the battery as seen from the negative side. As the battery, a sealed-type secondary battery such as a nickel cadmium battery or a nickel-metal hydride battery is used. However, the kind of the battery is not restricted to the above. In the cylindrical battery 1, a tall collector 1a is attached to a cover 11 on the positive side, and a low collector 11b is attached to the lower face of a case 12 on the negative side.

In the support member 2, as shown in Figs. 1 to 4, battery holes 2a having a diameter which is equal to or slightly larger than the diameter of the cylindrical portion of the cylindrical battery 1 are formed in one side face and in two rows each of which consists of five holes (the number of holes is not limited). In the embodiment, one row of the battery holes 2a is slightly shifted in the row direction with respect to the other row (in other words, the holes are inclined). The configuration in which the battery holes 2a of one row are slightly shifted with respect to the battery holes 2a of the other row in this way allows the height H of the support member 2 to be suppressed to a small value when the support member holds batteries and is horizontally placed. In the two rows of the battery holes 2a, the one row is for the positive side, and the other row is for the negative side. The battery holes 2a of the support member 2 are formed at two kinds of depths which are different from each other by a degree equal to the height difference between the collectors 1a and 1b of the cylindrical battery 1, and disposed so that the depths of adjacent battery holes are different from each other. The cylindrical portion on the positive side of one cylindrical battery 1 is fitted into a shallow battery hole 2a, and that on the negative side of another cylindrical battery 1 is fitted into a deep battery hole 2a.

In the bottom face of each battery hole 2a of the support member 2, an electrode hole 2b which is smaller in diameter than the battery hole 2a is opened so as to pass through to the rear face. Each electrode hole 2b is configured so that, when the cylindrical portion of the cylindrical battery 1 is fitted into the battery hole 2a, a projection of the collector 1a or 1b enters the electrode hole, thereby allowing the shoulder of the cylindrical portion to abut against the bottom face of the battery hole 2a. Since the battery holes 2a into which the cylindrical portions on the positive and negative sides are respectively fitted are different in depth from each other, the connecting faces at the tip ends of the collectors 1a and 1b of both the positive and negative sides are substantially flush with each other.

The battery hole 2a at one end of the one row of the support member 2, and the battery hole 2a at the opposite end of the other row are formed so as to be slightly projected toward the outside. No electrode hole 2b is formed in the two battery holes 2a, and hence the two battery holes 2a are correspondingly thinner. As described later, a plurality of battery packs in each of which the batteries 1 are held between the support member 2 and the other support member 2' are produced and these battery packs are connected to each other. In this case, the collector 1a of one battery pack is connected to the collector 1b of another battery pack by a connecting plate 3 in such a manner that the connecting plate 3, the collectors 1a and 1b, and bolts 5 fixed (screwed) to the collectors 1a and 1b do not protrude to the outside of the support member 2 or 2'.

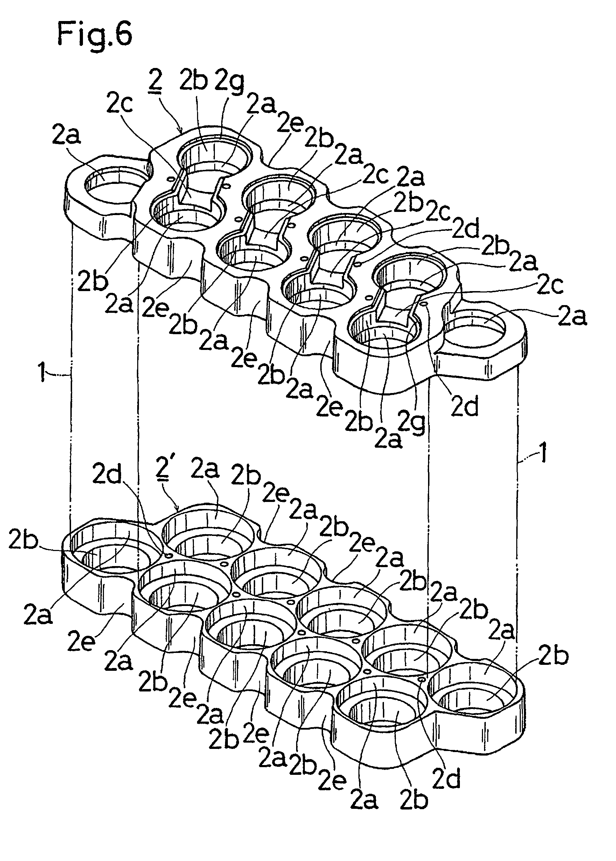

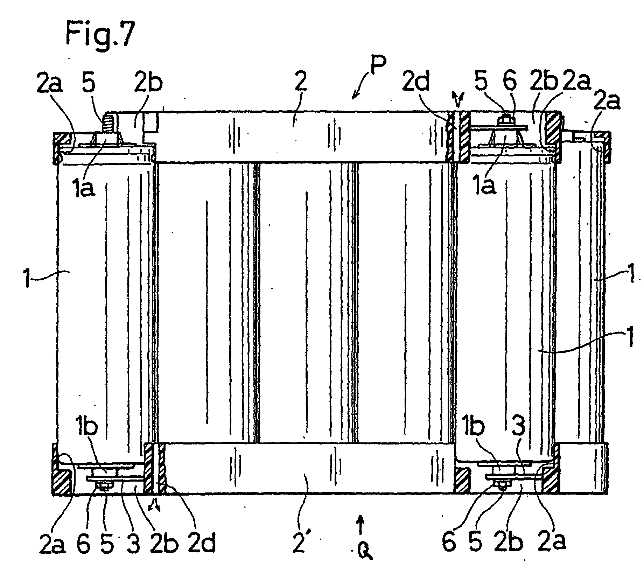

In the other support member 2', in the same manner as the other battery holes 2a, an electrode hole 2b is formed also in the two battery holes 2a disposed at ends which are respectively opposed to the opposite ends of the two rows of the support member 2 (see Figs. 6 and 7).

A groove 2c is formed between each of pairs of adjacent electrode holes 2b on the positive and negative sides and in the one and other rows of the electrode holes formed in the support member 2. These electrode holes are communicated with each other through the groove. The groove 2c is formed so as to be inclined in accordance with the electrode holes 2b which are formed in the bottoms of the battery holes 2a that are inclinedly disposed. The grooves 2c are used for placing the connecting plates 3 which are respectively connected between the collectors 1a and 1b of the batteries 1 (see Figs. 7 to 10). Each connecting plate 3 is bridged between paired collectors 1a and 1b, and fixed to the collectors by screwing of nuts 6 and bolts 5. The grooves 2c inhibit the connecting plates 3 from being rotated in excess of that needed. Even when one side of one of the connecting plates 3 is disconnected and the connecting plate is rotated, the corresponding groove blocks the connecting plate from being contacted with another member, thereby preventing a short circuit from occurring. The grooves 2c have a depth at which, when the connecting plates 3 are attached, even a part of each connecting plate 3 is not projected from the surface of the support member 2.

In the support members 2 and 2', vent holes 2d which pass through from one face to another face are opened at appropriate places in a thick portion surrounded by the battery holes 2a, etc. A recess groove 2e which elongates from the front face to the rear face is formed on the side face of the periphery of the support member 2 and between adjacent battery holes 2a. When the support member 2 is horizontally placed under a state in which the support member holds batteries, the recess grooves 2e and the floor form spaces so that the air easily moves through the spaces, whereby the batteries 1 are effectively cooled. The four corners of each of the rectangular support members 2 and 2' are ground into an arcuate convex shape, thereby forming rounded portions 2f.

Fig. 6 is a perspective view showing a state in which the batteries 1 are held by the support members 2 and 2'. The support members 2 and 2' are placed in a direction in which their faces wherein the battery holes 2a are formed are opposed to each other and the opposing battery holes 2a have different depths. Therefore, the cylindrical portions of the positive and negative sides of ten cylindrical batteries 1 are fitted into the battery holes 2a of the upper and lower support members 2 and 2', respectively.

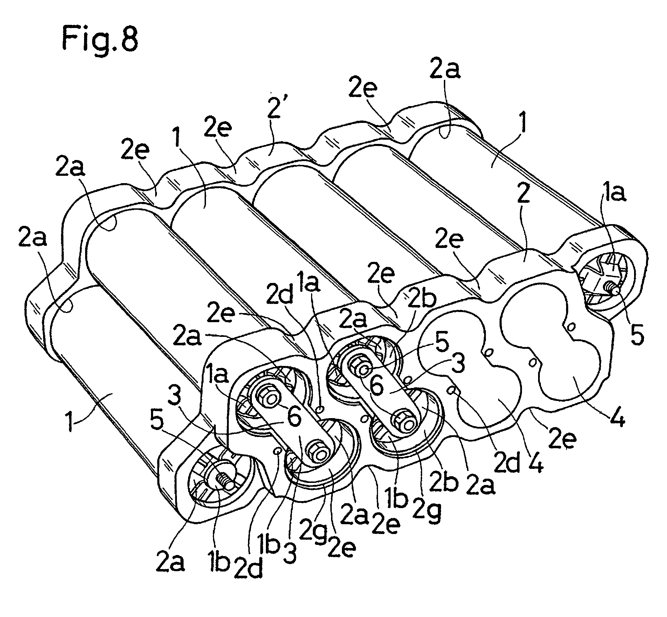

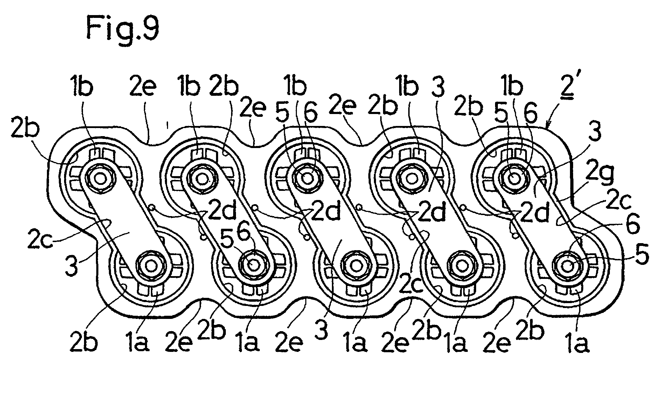

Fig. 7 is a front view showing a state in which the ten cylindrical batteries 1 are held between the support members 2 and 2', Fig. 8 is a perspective view as seen in the direction of the arrow P in Fig. 7, and Fig. 9 is a bottom view as seen in the direction of the arrow Q in Fig. 7.

As shown in the figures, the ten cylindrical batteries 1 are pressingly held between the upper and lower support members 2 and 2', and the collectors 1a and 1b of the cylindrical batteries 1 are sequentially connected to each other by the connecting plates 3 bridged in the grooves 2c through which the paired electrode holes 2b are communicated with each other. In the rear face (the upward-directed face) of the support member 2, flat plate-like connecting plates 3 made of a conductor are bridged between the collectors 1a and 1b which are adjacent to each other in the row direction, and screwed by the bolts 5 and the nuts 6. In the rear face (the downward-directed face) of the support member 2' on the lower side, similar connecting plates 3 are bridged between the collectors 1a and 1b which are adjacent to each other across the rows, and screwed by the bolts 5 and the nuts 6. As a result, as shown in Fig. 9, all the ten the cylindrical batteries 1 are connected in series between the collectors 1a and 1b on the positive and negative sides which are exposed respectively at two end places of the upper support member 2 to which the connecting plates 3 are not attached. The screwing of the connecting plates 3 by means of the bolts 5 and the nuts 6 is performed by passing male-thread portions of the bolts 5 through holes opened in the ends of the connecting plates 3 and then screwing the male-thread portions into female-thread holes of the connecting faces of the collectors 1a and 1b. In this case, as shown in Fig. 7, the connecting faces of the collectors 1a and 1b are substantially flush with the rear face of the support member 2, and hence the flat plate-like connecting plates 3 can be screwed by the bolts 5 with being placed as they are at parallel positions which are substantially contacted with the rear face of the support member 2. The screw fixation of the connecting plates 3 enables the upper and lower support members 2 and 2' to be fixed integrally with the ten cylindrical battery 1. In the support member 2 (and also in the support member 2'), as shown in Figs. 1 to 4 and the like, a step 2g is formed in an edge of each of the electrode holes 2b and the grooves 2c. Covers 4 (see Fig. 8) are fitted into the steps 2g, respectively.

In the battery holder in which the ten cylindrical batteries 1 are held by the support members 2 and 2' as described above, ventilation is enabled between the exterior and the vicinity of the inward-directed peripheral side faces of the cylindrical batteries 1, via the vent holes 2d of the supporting members 2 and 2'. Consequently, heat generated from the cylindrical batteries 1 can be rapidly dissipated to the exterior. The outward-directed peripheral side faces of the cylindrical batteries 1 which are arranged in two rows are exposed as they are between the upper and lower supporting members 2 and 2', so that heat can be dissipated also from the faces. Accordingly, the heat dissipation of the cylindrical batteries 1 is accelerated by the vent holes 2d and the like, whereby the temperature rise of the cylindrical batteries 1 can be suppressed so as not to exceed the specified range. The ventilation due to the vent holes 2d and the like is conducted by natural convention. Particularly when the amount of generated heat is large, the ventilation may be forcedly conducted by using a fan or the like.

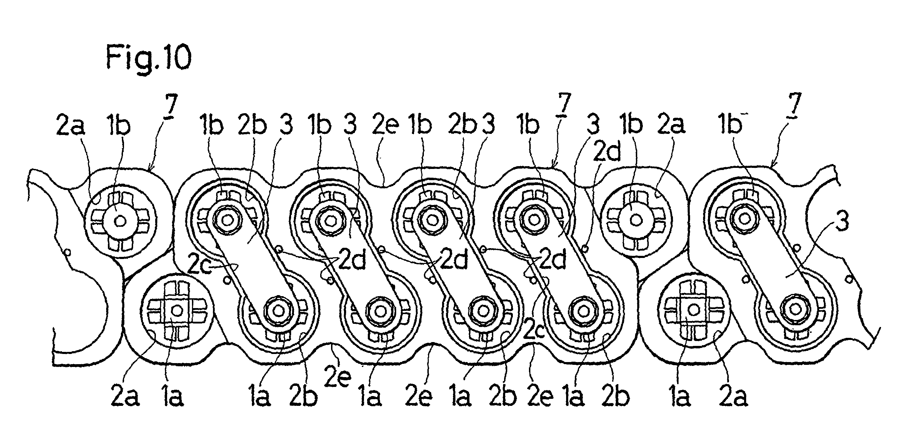

As shown in Fig. 10, a plurality of battery packs 7 in each of which ten cylindrical batteries 1 are held by the battery holder consisting of the supporting members 2 and 2' may be laterally connected to each other. When the battery packs 7 in which the batteries 1 are held between the supporting members 2 and 2' are laterally closely arranged, namely, the battery packs are located at positions where the collector 1a at one end portion of the one support member 2 of a certain battery pack 7 can be just connected to the other collector 1b of another battery pack 7 by the connecting plate 3. When a plurality of battery packs are connected to each other by the connecting plates 3 in this way, a number of batteries 1 are connected in series.

In the embodiment of the invention, the battery holder in which ten cylindrical batteries 1 are held has been described. The number of the cylindrical batteries 1 can be set arbitrarily. The battery holes 2a and the like in each supporting member 2 are adequately formed in accordance with the number of the cylindrical batteries 1 and the manner of arrangement.

Under a state in which unit batteries are connected to each other, the conductor portions such as the connecting plates 3 and the bolts 5 are exposed. In the support member 2 (and also in the support member 2'), however, the steps 2g are formed in the edges of the electrode holes 2b and the grooves 2c, and the covers 4 are respectively fitted into the steps 2g, whereby risks such as that the batteries are erroneously short-circuited can be prevented from occurring.

As described above in detail, according to the battery holder of the invention, a number of batteries can be held by a support member, and the support member is laterally disposed, whereby the batteries can be disposed as, for example, batteries for an electric vehicle without requiring a large space on the floor. When battery packs each holding a plurality of batteries are configured, a number of battery packs can be laterally arranged.

In the invention, heat generated from the cylindrical batteries can be dissipated to the exterior via the vent holes of the support members and the exposed side faces between the upper and lower support members, and hence the temperature rise of the cylindrical batteries can be suppressed as a result of performing natural convention or forced ventilation. When the battery holder in which cylindrical batteries are held by a pair of support members is horizontally laid on the floor, heat can be dissipated to the exterior via the recess grooves between the support members and the floor. Even when a number of cylindrical batteries are densely arranged, therefore, the temperature rise can be surely suppressed.

## Claims

1. A battery holder comprising a plate-like support member (2, 2') in which a plurality of battery holes (2a) of a predetermined depth, into which sealed portions of a positive terminal side or negative terminal side of sealed-type batteries (1) that are to be clamped at one side by the support member (2, 2') are to be respectively fitted, are formed in one face of said support member (2, 2'), a terminal hole (2b) is formed concentricalIy with each of said battery holes (2a) and with smaller diameter compared with each of said battery holes (2a), and vent holes (2d) which pass through from one face to the other face are opened at appropriate places among said battery holes (2a) of said support member (2), **characterized in that** one row of said battery holes (2a) with terminal holes (2b) is a row for positive terminal side, the other row of said battery holes (2a) with terminal holes (2b) being a row for negative terminal side, and a groove (2c) is formed between adjacent paired positive terminal side terminal hole and negative terminal side terminal hole, said paired positive terminal side terminal hole and negative terminal side terminal hole being communicated with each other through said groove (2c).

2. A battery holder according to claim 1, wherein said plate-like support member (2) comprises extensions at opposite end portions of the rows for positive and negative terminal sides respectively, each of said extensions only having a battery hole (2a) of a predetermined depth, into which a sealed portion of a positive terminal side or a negative terminal side of a sealed-type battery is to be fitted.

3. A battery holder according to claim 1 or 2, wherein in each of said one and other rows only a battery hole (2a) for a positive terminal side or a negative terminal side is formed at each of opposite end portions.

4. A battery holder according to claim 1, 2 or 3, wherein said battery holder comprises a pair of plate-like support members (2, 2') which support one and another side of batteries (1), respectively, one of said support members (2') is the support member set forth in claim 1, and the other support member (2) is the support member of set forth in claim 2.

5. A battery holder according to any one of claims 1 to 4, wherein, among said terminal holes (2b) the paired positive terminal side terminal hole and negative terminal side terminal hole which are communicated with each other through said groove (2c) are inclinedly disposed.

6. A battery holder according to claims 1 to 5, wherein a recess groove (2e) is formed at an appropriate place of a side face of said plate-like support member (2, 2').

7. A battery holder according to any one of claims 1 to 6, wherein, when collectors (la, 1b) of different heights are disposed on said positive and negative terminal sides, said terminal holes which are adjacent to each other are respectively formed at depths having a height difference which is equal to a height difference of said collectors (1a, 1b) of different polarities.

## Patentansprüche

1. Batteriehalter, umfassend
ein plattenartiges Halteelement (2, 2'), in welchem eine Mehrzahl von Batterielöchern (2a) mit vorbestimmter Tiefe, in die Befestigungsabschnitte einer positiven Anschlussseite oder negativen Anschlussseite von versiegelten Batterien (1) (sealed-type batteries), die an einer Seite durch das Halteelement (2, 2') angeklemmt werden sollen, entsprechend einzupassen sind, in einer Fläche des Halteelements (2, 2') ausgebildet ist,
ein Anschlussloch (2b), das konzentrisch mit jedem der Batterielöcher (2a) und mit einem verglichen mit jedem Batterieloch (2a) kleineren Durchmesser ausgebildet ist, und
Luftlöcher (2d), die von einer Seite zur anderen Seite durchtreten und sich an geeigneten Stellen von den Batterielöchern (2a) des Halteelements (2) öffnen,
**dadurch gekennzeichnet, dass**
eine Reihe der Batterielöcher (2a) mit Anschlusslöchern (2b) eine Reihe für die positive Anschlussseite ist, die andere Reihe der Batterielöcher (2a) mit Anschlusslöchern (2b) eine Reihe für die negative Anschlussseite ist und eine Rille (2c) zwischen angrenzenden Paaren eines positiven anschlussseitigen Anschlusslochs und eines negativen anschlussseitigen Anschlusslochs gebildet wird, wobei das Paar eines positiven anschlussseitigen Anschlusslochs und eines negativen anschlussseitigen Anschlusslochs durch die Rille (2c) miteinander kommunizieren.

2. Batteriehalter nach Anspruch 1, bei der das plattenartige Halteelement (2) Verlängerungen an gegenüber liegenden Endabschnitten von Reihen mit positiven bzw. negativen Anschlussseiten umfasst, wobei jede der Verlängerungen nur ein Batterieloch (2a) mit vorbestimmter Tiefe aufweist, in welches ein Befestigungsabschnitt einer positiven Anschlussseite oder einer negativen Anschlussseite einer versiegelten Batterie eingepasst werden soll.

3. Batteriehalter nach Anspruch 1 oder 2, bei der in jeder einen oder anderen Reihe nur ein Batterieloch (2a) für eine positive Anschlussseite oder eine negative Anschlussseite an jeder der gegenüber liegenden Endabschnitte ausgebildet ist.

4. Batteriehalter nach Anspruch 1, 2 oder 3, bei dem der Batteriehalter ein Paar von plattenartigen Halteelementen (2, 2') umfasst, die eine bzw. eine andere Seite der Batterien (1), wobei eines der Halteelemente (2') das in Anspruch 1 beschriebene Halteelement ist und das andere Halteelement (2) das in Anspruch 2 beschriebene Halteelement ist.

5. Batteriehalter nach einem der Ansprüche 1 bis 4, bei dem von den Anschlusslöchern (2b) die Paare eines positiven anschlussseitigen Anschlusslochs und eines negativen anschlussseitigen Anschlusslochs, welche miteinander durch die Rille (2c) kommunizieren, geneigt angeordnet sind.

6. Batteriehalter nach einem der Ansprüche 1 bis 5, bei dem eine Aussparungsrille (2e) an einer geeigneten Stelle einer Seitenfläche des plattenartigen Halteelements (2, 2') ausgebildet ist.

7. Batteriehalter nach einem der Ansprüche 1 bis 6, bei dem, wenn Kollektoren (1a, 1b) unterschiedlicher Höhe auf den positiven und negativen Anschlussseiten angeordnet werden, die Anschlusslöcher, die aneinander angrenzen, jeweils in einer Tiefe so ausgebildet sind, dass sie eine Höhendifferenz aufweisen, die gleich der Höhendifferenz der Kollektoren (1a, 1b) mit verschiedenen Polaritäten ist.

## Revendications

1. Support de batterie comprenant un élément support **(2, 2')** en forme de plaque, dans lequel une pluralité de trous de batterie **(2a)** de profondeur prédéterminée, dans lesquels sont montées respectivement des parties, scellées d'un côté, de bornes positives ou, d'un côté, de bornes négatives de batteries **(1)** de type scellé, qui doivent être serrées d'un côté par l'élément support **(2, 2')**, est formée dans une face dudit élément support **(2,2')**, un trou de borne **(2b)** est formé de manière concentrique à chacun desdits trous de batterie **(2a)** avec un diamètre plus petit par rapport à chacun desdits trous de batterie **(2a)** et des trous d'aération **(2d)** qui traversent d'une face à l'autre face, sont ouverts en des endroits appropriés parmi lesdits trous de batterie **(2a)** dudit élément support **(2)**, **caractérisé en ce qu'**une rangée desdits trous de batterie **(2a)** avec des trous de borne **(2b)** est une rangée pour le côté des bornes positives, l'autre rangée desdits trous de batterie **(2a)** avec des trous de borne **(2b)** étant une rangée pour le côté des bornes négatives, et une rainure **(2c)** est formée entre des paires adjacentes de trous de borne du côté des bornes positives et des paires adjacentes de trous de borne du côté des bornes négatives, lesdites paires de trous de borne du côté des bornes positives et de trous de borne du côté des bornes négatives communiquant entre elles à travers- ladite rainure **(2c)**.

2. Support de batterie selon la revendication 1, dans lequel ledit élément support **(2)** de type plaque comprend des extensions au niveau de parties d'extrémité opposées des rangées pour les côtés des bornes positives et négatives respectivement, chacune desdites extensions ayant seulement un trou de batterie **(2a)** de profondeur prédéterminée, dans lequel une partie scellée d'un côté de bornes positives ou d'un côté de bornes négatives d'une batterie de type scellé doit se monter.

3. Support de batterie selon la revendication 1 ou 2, dans lequel, dans chacune desdites rangées, un seul trou de batterie **(2a)** pour un côté de bornes positives ou un côté de bornes négatives est formé au niveau de chacune des parties d'extrémité opposées.

4. Support de batterie selon la revendication 1, 2 ou 3, dans lequel ledit support de batterie comprend une paire d'éléments supports **(2, 2')** de type plaque, qui supportent l'un et l'autre côtés de batteries **(1)**, respectivement, l'un desdits éléments supports **(2')** est l'élément support décrit à la revendication 1, et l'autre élément support **(2)** est l'élément support décrit à la revendication 2.

5. Support de batterie selon l'une quelconque des revendications 1 à 4, dans lequel, parmi lesdits trous de borne **(2b)**, les paires de trous de borne du côté des bornes positives et de trous de borne du côté des bornes négatives qui communiquent entre eux à travers ladite rainure **(2c,** sont inclinées.

6. Support de batterie selon l'une quelconque des revendications 1 à 5, dans lequel une gorge en renfoncement **(2e)** est formée dans un endroit approprié d'une face latérale dudit élément support **(2, 2')** en forme de plaque.

7. Support de batterie selon l'une quelconque des revendications 1 à 6, dans lequel, quand des collecteurs (1a, 1b) de différentes hauteurs sont placés sur les côtés des bornes positives et négatives, lesdits trous de bornes qui sont mutuellement adjacentes, sont formés respectivement à des profondeurs ayant une différence de hauteur qui est égale à une différence de hauteur desdits collecteurs **(1a, 1b)** de polarités différentes.
